# EUROPEAN PATENT SPECIFICATION

(11) **EP 4 131 582 B1**
(45) Date of publication and mention of the grant of the patent: **06.05.2026**
(21) Application number: 21864652.9
(22) Date of filing: 01.09.2021
(51) Int. Cl.: H01M 10/6556, H01M 10/6567, H01M 10/643, H01M 10/613, H01M 50/24, H01M 50/20, H01M 50/289, H01M 50/204

(54) **BATTERY MODULE**
BATTERIEMODUL
MODULE DE BATTERIE

(30) Priority: 03.09.2020 KR 20200112416
(43) Date of publication of application: 08.02.2023
(73) Proprietor: LG Energy Solution, Ltd., Seoul 07335 (KR)
(72) Inventor: LIM, Jong Min, Daejeon 34122 (KR); KIM, Jae Hong, Daejeon 34122 (KR)
(74) Representative: Goddar, Heinz J.
(86) International application number: PCT/KR2021/011778
(87) International publication number: WO 2022/050693

(56) References cited:
- EP-A1- 3 651 262
- WO-A1-2018/209776
- CN-A- 107 910 616
- CN-U- 209 592 257
- JP-A- 2009 187 747
- KR-A- 20070 014 658
- KR-A- 20200 040 024
- US-A1- 2009 301 700
- US-A1- 2014 065 455
- US-A1- 2017 162 922

## Description

### TECHNICAL FIELD

The present invention relates to a battery module, and more particularly, to a battery module capable of effectively cooling a plurality of battery cells.

### BACKGROUND ART

In general, a battery module is constituted by a plurality of battery cells. A battery cell is an electrode assembly and is repeatedly chargeable and dischargeable through an electrochemical reaction between components by including positive and negative collectors, separators, an active material, an electrolytes, and the like.

Here, the battery cells generate heat during the charging or discharging. If such heat is not removed, deterioration of the battery cells may be accelerated, and in some cases, ignition or explosion of the battery cells may occur.

Conventionally, a heat sink is used to cool the battery cells. The heat sink is disposed between the battery cells and installed to be in contact with the battery cells. Thus, the refrigerant flowing inside the heat sink absorbs heat generated in the battery cells to adjust a temperature of each of the battery cells.

However, when the battery cells are densely arranged in a narrow space, it may be difficult to secure an installation space for the heat sink between the battery cells. Thus, the heat sink may not be installed between the battery cells, and thus the battery cells may not be cooled.

### (Patent Document 1) KR2020-0064761 A

EP 3 651 262 A1 describes a battery pack, including a plurality of battery cells, a case providing an accommodation space for accommodating the battery cells and a cooling fluid for cooling the battery cells, and a barrier wall extending across the accommodation space and dividing the accommodation space into an upstream area in communication with an inlet for the cooling fluid and a downstream area in communication with an outlet for the cooling fluid. The barrier wall provides a communication area where the upstream area and the downstream area communicate with each other. The inlet and the outlet are at a first end of the barrier wall in an extension direction of the barrier wall, and the communication area is at a second end of the barrier wall in the extension direction of the barrier wall.

WO 2018/209776 A1 describes a battery module, comprising a shell and a series of cylindrical battery cells arranged in the shell. Each of the cylindrical battery cells has electrodes at two ends being exposed from corresponding openings on opposite sides of the shell. The shell defines a liquid inlet and a liquid outlet, and a cooling fluid enters the shell from the liquid inlet and is output out of the shell from the liquid outlet. Sealing members are arranged between the opposite sides of the shell and the two ends of the cylindrical battery cell. The sealing members prevent the cooling fluid from flowing out from the corresponding openings.

US 2017/0162922 A1 describes an energy storage pack including a coolant inlet manifold, a coolant outlet manifold, and a plurality of thermal-exchange tubes extending between the coolant inlet manifold and the coolant outlet manifold to exchange heat between coolant passing through the plurality of thermal-exchange tubes and a plurality of battery cells mounted adjacent to and among the plurality of thermal-exchange tubes within the energy storage pack. The energy storage pack may further include a coolant inlet opening located on the coolant inlet manifold and a coolant outlet opening located on the coolant outlet manifold.

US 2009/0301700 A1 describes a method for producing a heat exchanger tube bundle for a heat exchanger of an electrochemical energy accumulators. Heat exchanger channels and an intended profile are incorporated into material strips by deep drawing. A forward-flow distribution aperture is incorporated into a first such material strip, and return collecting apertures are incorporated into a second such material strip, forming first and the second heat exchanger plates. The latter are aligned in such a manner that webs of the two heat exchanger plates border each other, and the heat exchanger channels form heat exchanger tubes. The heat exchanger plates arranged in this manner are joined together to form a heat exchanger tube bundle. A corresponding heat exchanger tube bundle, a heat exchanger module, a heat exchanger with two or more heat exchanger modules, and an electrochemical energy accumulator with a heat exchanger of this type are also described.

### DISCLOSURE OF THE INVENTION

### TECHNICAL PROBLEM

The present invention provides a battery module capable of easily securing a space in which a cooling fluid is capable of moving between a plurality of batteries.

The present invention provides a battery module capable of effectively cooling a plurality of battery cells.

### TECHNICAL SOLUTION

A battery module according to an example not forming part of the present invention includes: a plurality of battery cells, which are insulated and spaced apart from each other to form an empty space; an upper cover having a plurality of through-holes through which upper ends of the battery cells pass to be inserted; a box-shaped lower cover having an inner space, in which the battery cells are disposed, having an opened upper portion, and coupled to the upper cover; a cooling fluid supply part connected to one side of the lower cover to supply a cooling fluid into the inner space of the lower cover; a cooling fluid discharge part connected to the other side of the lower cover to discharge the cooling fluid from the inner space of the lower cover; a first blocking part installed on the upper ends of the battery cells, wherein the battery cells are inserted into the through-holes and glue is applied between the upper cover and the battery cells and then cured, to block a gap between the battery cells and the through-holes; and a second blocking part installed in the inner space of the lower cover and coupled to lower ends of the battery cells, wherein glue is filled in the inner space of the lower cover and the battery cells are immersed in the glue which is then cured, so that the battery cells are spaced apart from each other and supported,
wherein a path for the cooling fluid supplied into the inner space of the lower cover is formed between the battery cells.

The battery module may further include a gasket installed between the upper cover and the lower cover.

The battery module may further include a plurality of coupling bolts passing through the lower cover and coupled to the upper cover so that the upper cover and the lower cover are detachably coupled to each other.

A battery module according to the present invention includes: a plurality of battery cells; a flexible cooling passage installed between the battery cells; a cooling fluid supply part connected to one side of the flexible cooling passage to supply a cooling fluid into the flexible cooling passage; a cooling fluid discharge part connected to the other side of the flexible cooling passage to discharge the cooling fluid of the flexible cooling passage; a first blocking part installed on upper ends of the battery cells so that the battery cells are spaced apart from each other and supported; and a second blocking part installed between lower ends of the battery cells so that the battery cells are spaced apart from each other and supported, wherein the flexible cooling passage is disposed in a spaced space between the first blocking part and the second blocking part, the first blocking part and the second blocking part are formed along a shape of the space between the battery cells, the first blocking part comprises a first fixing groove formed on its lower surface, in which a first supporting portion of the upper portion of the flexible cooling passage is inserted, thereby supporting the upper part of the flexible cooling passage, and the second blocking part comprises a second fixing groove formed on its upper surface, in which a second supporting portion of the lower portion of the flexible cooling passage is inserted, thereby supporting the lower part of the flexible cooling passage.

A width of a cooing fluid moving path formed by the flexible cooling passage may be 0.15 mm or more to 0.25 mm or less.

The first blocking part and the second blocking part may be formed by curing glue applied to be in contact with the battery cells.

### ADVANTAGEOUS EFFECTS

According to embodiments of the present invention, it may be possible to easily secure the space through which the cooling fluid moves between the plurality of battery cells. Thus, even when the distance between the battery cells is narrowed, the cooling fluid may stably pass through the space between the battery cells. Therefore, it may be possible to effectively cool the plurality of battery cells through the cooling fluid.

### BRIEF DESCRIPTION OF THE DRAWINGS

FIG. 1 is an exploded perspective view illustrating a structure of a battery module according to a first example not forming part of the present invention.
FIG. 2 is a side cross-sectional view illustrating the structure of the battery module according to the first example.
FIG. 3 is a plan view illustrating the structure of the battery module according to the first example.
FIG. 4 is a perspective view illustrating a structure of a battery module according to a second example not forming part of the present invention.
FIG. 5 is an exploded perspective view illustrating the structure of the battery module according to the second example.
FIG. 6 is a perspective view illustrating a structure of a battery module according to the present invention.
FIG. 7 is a plan view illustrating the structure of the battery module according to the present invention.
FIG. 8 is a perspective view illustrating structures of a flexible cooling passage, a first blocking part, and a second blocking part according to an example not forming part of the present invention.
FIG. 9 is a perspective view illustrating structures of a flexible cooling passage, a first blocking part, and a second blocking part according to the present invention.

### MODE FOR CARRYING OUT THE INVENTION

Hereinafter, embodiments will be described in detail with reference to the accompanying drawings. The present invention may, however, be embodied in different forms and should not be construed as limited to the embodiments set forth herein. Rather, these embodiments are provided so that the present invention will be thorough and complete, and will fully convey the scope of the present invention to those skilled in the art. In the figures, the dimensions of layers and regions are exaggerated for clarity of illustration. Like reference numerals refer to like elements throughout.

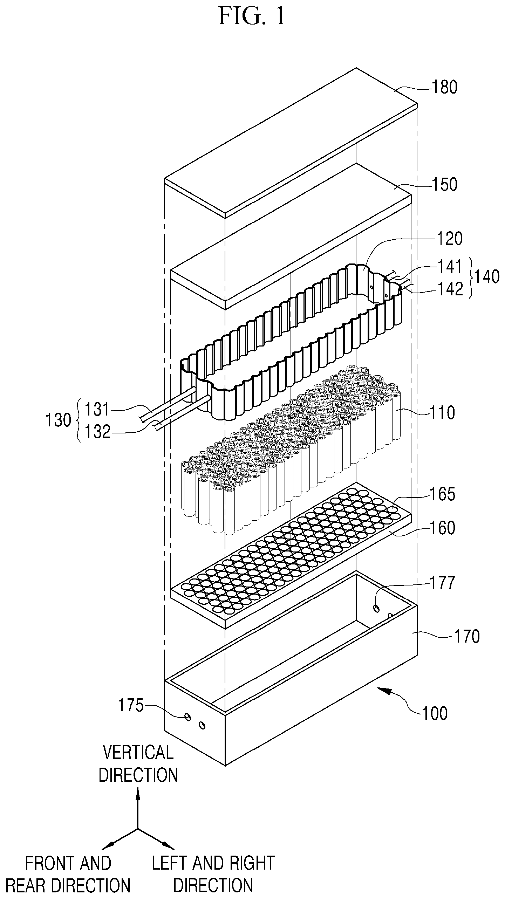

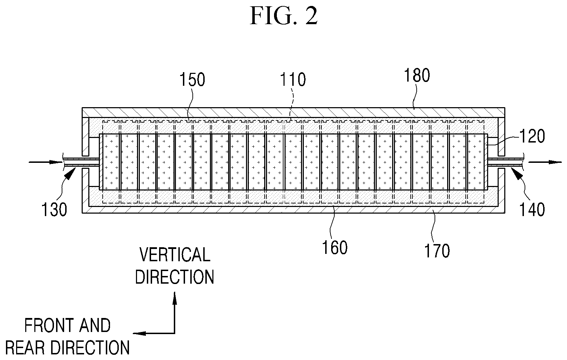

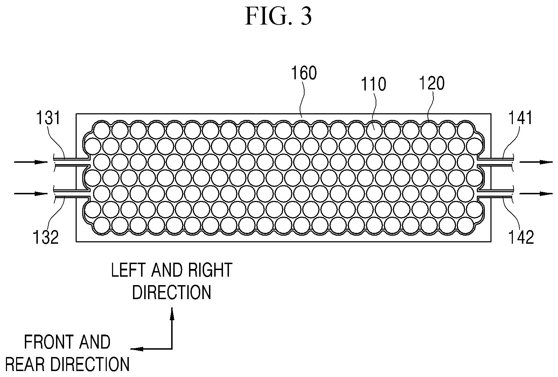

FIG. 1 is an exploded perspective view illustrating a structure of a battery module according to a first example not forming part of the present invention, FIG. 2 is a side cross-sectional view illustrating the structure of the battery module according to the first example, and FIG. 3 is a plan view illustrating the structure of the battery module according to the first example. Hereinafter, a battery module according to a first example will be described.

The battery module according to the first example is a device for supplying power to electronic equipment. Referring to FIGS. 1 to 3, a battery module 100 includes a battery cell 110, an accommodation part 120, a cooling fluid supply part 130, a cooling fluid discharge part 140, a first blocking part 150, and a second blocking part 160.

The battery cell 110 may be formed in a cylindrical shape. The battery cell 110 may be insulated or waterproof. For example, a portion of the battery cell 110, which is in contact with a cooling fluid, may be coated to be insulated. Thus, the battery cell 110 may be in direct contact with the cooling fluid, and the cooling fluid may be introduced into the battery cell 110 to suppress or prevent the battery cell 110 from being damaged.

In addition, the battery cell 110 may be provided in plurality as illustrated in FIG. 1. The battery cells 110 may be erected and aligned at preset positions. The battery cells 110 may be spaced apart from each other to form an empty space.

The accommodation part 120 surrounds circumferences of the battery cells 110 to form an accommodation space in which the battery cells 110 are accommodated. Each of upper and lower portions of the accommodation part 120 may be opened. That is, the accommodation part 120 may be formed in a belt shape to surround the battery cells 110.

In addition, the accommodation part 120 may be formed along a circumferential shape of the battery cells 110 disposed at the outermost side among the battery cells 110 and may be in close contact with the battery cells 110 disposed at the outermost side among the battery cells 110. That is, the accommodation part 120 may be disposed to surround the circumferences of the battery cells 110, thereby sealing side surfaces of the battery cells 110.

Here, a vertical length of the accommodation part 120 may be less than that of each of the battery cells 110. Thus, upper and lower ends of the battery cells 110 may protrude to the outside of the accommodation part 120. However, the shape of the accommodation part 120 is not limited thereto and thus may vary.

Here, the accommodation part 120 may be provided as an insulating sheet or a waterproof sheet. Thus, it is possible to suppress or prevent the cooling fluid supplied to the accommodation space from being discharged to the outside by passing through the accommodation part 120.

The cooling fluid supply part 130 is connected to one side (or a front side) of the accommodation part 120. The cooling fluid supply part 130 may supply the cooling fluid to the accommodation space formed by the accommodation part 120. For example, the cooling fluid may be cooling water. Thus, while the cooling fluid is filled in the accommodation space, the cooling fluid may flow into the space between the battery cells 110 accommodated in the accommodation space to cool the battery cells 110.

In addition, the cooling fluid supply part 130 may include a plurality of supply lines connected to different portions at one side of the accommodation part 120. For example, a first supply line 131 and a second supply line 132, which are spaced apart from each other in a left and right direction, may be connected to a front surface of the accommodation part 120.

The first supply line 131 is formed in the form of a pipe and forms a path through which the cooling fluid moves. The first supply line 131 may has one end connected to a storage tank (not shown), in which the cooling fluid is stored, and the other end connected to the accommodation part 120. The first supply line 131 may also be provided with a first control valve (not shown) that opens or closes the path through which the cooling fluid moves. Thus, the cooling fluid stored in the storage tank may be supplied to the accommodation space through the first supply line 131.

The second supply line 132 is formed in the form of a pipe and forms a path through which the cooling fluid moves. The second supply line 132 may has one end connected to a storage tank (not shown), in which the cooling fluid is stored, and the other end connected to the accommodation part 120. The second supply line 132 may also be provided with a second control valve (not shown) that opens or closes the path through which the cooling fluid moves. Thus, the cooling fluid stored in the storage tank may be supplied to the accommodation space through the second supply line 132.

When the plurality of supply lines are provided, the cooling fluid may be quickly filled in the accommodation space, or the cooling fluid in the accommodation space may be quickly circulated. Thus, it may be possible to rapidly cool the battery cells 110 accommodated in the accommodation space. However, the number of provided supply lines and the structure in which the supply lines are disposed are not limited thereto and thus may vary.

The cooling fluid discharge part 140 is connected to the other side (or a rear surface) of the accommodation part 120. The cooling fluid discharge part 140 may discharge the cooling fluid inside the accommodation part. Thus, the cooling fluid supplied from one side of the accommodation part 120 may pass through the entire accommodation space and then be discharged to the other side of the accommodation part 120. Thus, it may be possible to cool all of the battery cells 110 accommodated in the accommodation space.

Also, the cooling fluid discharge part 140 may include a plurality of discharge lines connected to different portions of the other side of the accommodation part 120. For example, a first discharge line 141 and a second discharge line 142, which are spaced apart from each other in the left and right direction, may be connected to the rear surface of the accommodation part 120.

The first discharge line 141 is formed in the form of a pipe and forms a path through which the cooling fluid moves. The first discharge line 141 may have one end connected to the accommodation part 120 and the other end connected to equipment (not shown) for processing the cooling fluid. The first discharge line 141 may also be provided with a first discharge valve (not shown) that opens or closes the path through which the cooling fluid moves. Thus, an amount of cooling fluid discharged from the accommodation part 120 through the first discharge line 141 may be adjusted.

The second discharge line 142 is formed in the form of a pipe and forms a path through which the cooling fluid moves. The first discharge line 142 may have one end connected to the accommodation part and the other end connected to equipment (not shown) for processing the cooling fluid. The second discharge line 142 may also be provided with a first discharge valve (not shown) that opens or closes the path through which the cooling fluid moves. Thus, an amount of cooling fluid discharged from the accommodation part 120 through the second discharge line 142 may be adjusted.

The number of discharge lines may be equal to or greater than the number of supply lines. Thus, it may be possible to adjust the amount of cooling fluid discharged to the discharge lines according to the amount of cooling fluid supplied from the supply lines. Thus, it may be easy to prevent an accident in which the accommodation part 120 bursts from occurring and to properly maintain the amount of cooling fluid in the accommodation space. However, the number of provided discharge lines and the structure in which the discharge lines are disposed are not limited thereto and thus may vary.

The first blocking part 150 is installed above the accommodation part 120. The first blocking part 150 may block an opened portion of an upper portion of the accommodation part 120. For example, the first blocking part 150 may be formed in a cap shape. A vertical length of an edge side surface of the first blocking part 150 may be longer than a length of an upper end exposed to the outside of the accommodation part 120 of the battery cell 110. Thus, the first blocking part 150 may be covered on the upper ends of the battery cells 110 and the upper portion of the accommodation part 120. Thus, the first blocking part 150 may block the upper portion of the accommodation part 120 to prevent the upper ends of the battery cells 110 from being exposed to the outside and prevent the cooling fluid supplied to the accommodation space from leaking through the opened upper portion of to the accommodation part 120. That is, the edge side surface of the first blocking part 150 is formed to extend enough to cover a portion of the upper portion of the accommodating portion 120 and blocks the cooling fluid supplied to the accommodation space from leaking to the upper portion of the accommodation part 120.

Also, the first blocking part 150 may support the battery cells 110. For example, a plurality of first support grooves (not shown) may be formed on an inner ceiling surface of the first blocking part 150. The first support grooves may be spaced apart from each other, and the different battery cells 110 may be inserted into the first support grooves, respectively. Thus, the battery cells 110 may be spaced apart from each other and be maintained in a state in which the upper end is fixed by the first support groove.

The second blocking part 160 is installed under the accommodation part 120. The second blocking part 160 may block an opened portion of the lower portion of the accommodation part 120. For example, the second blocking part 160 may be formed in a cap shape. A vertical length of an edge side surface of the second blocking part 160 may be longer than a length of a lower end exposed to the outside of the accommodation part 120 of the battery cell 110. Thus, the second blocking part 160 may be covered on the lower ends of the battery cells 110 and the lower portion of the accommodation part 120. Thus, the second blocking part 160 may block the lower portion of the accommodation part 120 to prevent the upper ends of the battery cells 110 from being exposed to the outside and prevent the cooling fluid supplied to the accommodation space from leaking through the opened lower portion of to the accommodation part 120. That is, the edge side surface of the second blocking part 150 is formed to extend enough to cover a portion of the lower portion of the accommodating portion 120 and blocks the cooling fluid supplied to the accommodation space from leaking to the lower portion of the accommodation part 120.

Also, the second blocking part 160 may support the battery cells 110. For example, a plurality of second support grooves 165 may be formed in an inner bottom surface of the second blocking part 160. The second support grooves 165 may be disposed to be spaced apart from each other, and the different battery cells 110 may be inserted into the second support grooves, respectively. Thus, the battery cells 110 may be spaced apart from each other and be maintained in a state in which the lower end is fixed by the second support groove.

Here, the second support grooves 165 may be disposed to face each other while being spaced apart from the first support grooves in the vertical direction. The upper end of each of the battery cells 110 may be inserted into the first support groove, and the lower end may be inserted into the second support groove 165. Thus, the upper and lower ends of each of the battery cells 110 are fixed so that the battery cells 110 may be disposed at preset positions. That is, the first support grooves and the second support grooves 165 may determine the positions of the battery cells 110.

In addition, since the first support grooves are spaced apart from each other, and the second support grooves 165 are also spaced apart from each other, the battery cells 110 may also be spaced apart from each other. Thus, a path through which the cooling fluid may move may be formed between the battery cells 110. Thus, it may be possible to easily cool the battery cells 110 while the cooling fluid supplied to the accommodation space passes through the path between the battery cells 110.

Here, the cooling fluid supplied to the accommodation space is in direct contact with the battery cells 110. That is, since the cooling fluid and the battery cell 110 are accommodated in the same accommodation space, the cooling fluid supplied to the accommodation space may be in direct contact with the battery cells while moving between the battery cells 110 accommodated in the accommodation space. Thus, the cooling fluid may easily absorb the heat of the battery cells 110 to more effectively cool the battery cells 110.

The first blocking part 150 and the second blocking part 160 may be formed by curing glue applied to be in contact with the battery cells 110. Thus, as illustrated in FIG. 2, the first blocking part 150 and the second blocking part 160 may be attached to the battery cells 110 to stably fix and support the positions of the battery cells 110.

In addition, since the first blocking part 150 and the second blocking part 160 are formed by the glue, the first blocking part 150 and the second blocking part 160 may be manufactured in various shapes. Thus, it may be easy to form the first blocking part 150 and the second blocking part 160 according to the shape in which the battery cells 110 are disposed.

Here, each of the first blocking part 150 and the second blocking part 160 may have a waterproof function. Thus, the accommodation part 120, the first blocking part 150, and the second blocking part 160 may be coupled to each other to form a space in which the battery cells 110 are accommodated, and as illustrated in FIGS. 2 and 3, the cooling fluid may be filled without leaking in the inner space formed by coupling the accommodation part 120, the first blocking part 150, and the second blocking part 160. Thus, it may be possible to easily cool the battery cells 110 with the cooling fluid in a closed space.

The battery module 100 may further include a lower case 170 and an upper case 180. Thus, other components may be accommodated in an inner space formed by the lower case 170 and the upper case 180.

The lower case 170 may form a space in which the battery cells 110, the accommodation part 120, the first blocking part 150, and the second blocking part 160 are accommodated. For example, the lower case 170 may be formed in a box shape, and an upper portion may be opened. Thus, the battery cells 110, the accommodation part 120, the first blocking part 150, and the second blocking part 160 may be accommodated in the lower case 170 through the open upper portion.

In addition, a first through-hole 175 may be formed in one surface (or a front surface) of the lower case 170, and a second through-hole 177 may be formed in the other surface (or a rear surface) of the lower case 170. The first through-holes 175 may be provided as many as the number of supply lines, and the second through-holes 177 may be provided as many as the number of discharge lines. Thus, the supply lines may pass through the first through-holes 175 and be connected to one side of the accommodation part 120, and the discharge lines may pass through the second through-hole 177 and be connected to the other side of the accommodation part.

The upper case 180 is formed to cover the opened upper portion of the lower case 170. For example, the upper case 180 may be a plate formed along an opened portion of the lower case 170. Thus, when the upper case 180 is mounted on the lower case 170, the upper case 180 may cover and block the opened portion of the lower case 170. Thus, the battery cells 110, the accommodation part 120, the first blocking part 150, and the second blocking part 160 may be protected inside the upper case 180 and the lower case 170. However, the shapes and coupled structures of the lower case 170 and the upper case 180 are not limited thereto and thus may vary.

As described above, it may be possible to easily secure the space through which the cooling fluid moves between the plurality of battery cells 110. That is, the cooling fluid may pass through the space between the battery cells 110 to directly cool the battery cells 110. Thus, even when the distance between the battery cells 110 is narrowed, the cooling fluid may stably pass through the space between the battery cells 110. Thus, it may be possible to effectively cool the plurality of battery cells 110 through the cooling fluid.

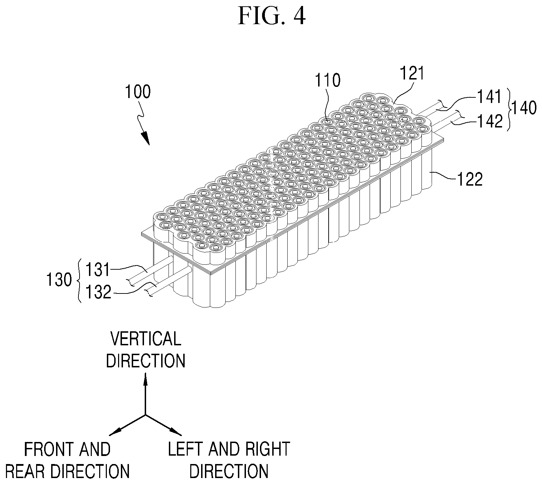

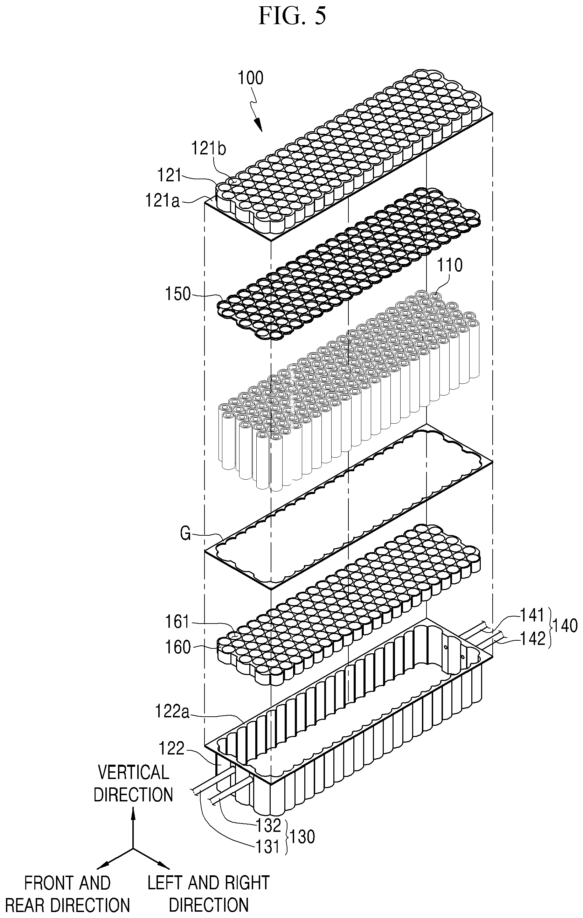

FIG. 4 is a perspective view illustrating a structure of a battery module according to a second example not forming part of the present invention, and FIG. 5 is an exploded perspective view illustrating the structure of the battery module according to the second example. Hereinafter, a battery module according to the second example will be described.

The battery module according to the second example is a device for supplying power tc electronic equipment. Referring to FIGS. 4 and 5, a battery module 100 includes a battery cell 110, an upper cover 121, a lower cover 122, a cooling fluid supply part 130, a cooling fluid discharge part 140, a first blocking part 150, and a second blocking part 160.

The battery cell 110 may be formed in a cylindrical shape. The battery cell 110 may be insulated or waterproof. For example, a portion of the battery cell 110, which is in contact with a cooling fluid, may be coated to be insulated. Thus, the battery cell 110 may be in direct contact with the cooling fluid, and the cooling fluid may be introduced into the battery cell 110 to suppress or prevent the battery cell 110 from being damaged.

In addition, the battery cell 110 may be provided in plurality. The battery cells 110 may be erected and aligned at preset positions. The battery cells 110 may be spaced apart from each other to form an empty space.

The upper cover 121 may be formed in a plate shape. A plurality of through-holes 121b through which upper ends of the battery cells 110 are inserted may be formed in the upper cover 121. Thus, positions at which the battery cells 110 are respectively inserted into the through-holes 121b may be determined.

Here, a portion of the upper cover 121 in which the through-hole 121b is formed may have a vertical length greater than that of a portion in which the through-hole 121b is not formed. That is, the portion in which the through-hole 121b is formed may be formed in a pipe shape. Thus, the portion at which the battery cell 110 is inserted into the through-hole 121b may increase. Thus, an area on which the upper cover 121 holds the upper ends of the battery cells 110 increases, and thus, the battery cells 110 may be more stably supported by the upper cover 121.

In addition, a first wing part 121a may be formed at a lower outer portion of the upper cover 121. The first wing part 121a may be formed to protrude laterally outward from the battery cell 110. The first wing part 121a may increase in contact area between the upper cover 121 and the lower cover 122. However, the shape of the upper cover 121 is not limited thereto and thus may vary.

The lower cover 122 is formed in a box shape and has an inner space in which the battery cells 110 are disposed. An upper portion of the lower cover 122 may be opened. An inner sidewall formed by the lower cover 122 may be formed along a circumferential shape of the battery cells 110 disposed at the outermost side among the battery cells 110 and may be in close contact with the battery cells 110 disposed at the outermost side among the battery cells 110. That is, the inner sidewall formed by the lower cover 122 may be disposed to surround a circumference of the battery cells 110 to seal side surfaces of the battery cells 110 and support the battery cells 110.

In addition, the lower cover 122 may be coupled to a lower portion of the upper cover 121. Thus, the opened upper portion of the lower cover 122 may be covered by the upper cover 121 to seal the inner space of the lower cover 122. Thus, when the cooling fluid is supplied to the inner space of the lower cover 122, it may be filled in the inner space without leaking to the outside.

Here, the lower cover 122 may include a second wing part 122a protruding laterally toward the outside of the battery cell 110 at the upper outer portion. The second wing part 122a may be in contact with a lower surface of the first wing part 121a of the upper cover 121. A contact area between the upper cover 121 and the lower cover 122 may increase by the second wing part 122a. Thus, the upper cover 121 and the lower cover 122 may be more stably coupled to each other. However, the structure and shape of the lower cover 122 is not limited thereto and thus may vary.

The cooling fluid supply part 130 is connected to one side (or a front side) of the lower cover 122. The cooling fluid supply part 130 may supply the cooling fluid to an inner space of the lower cover 122. For example, the cooling fluid may be cooling water. Thus, while the cooling fluid is filled in the inner space of the lower cover 122, the cooling fluid may flow into the space between the battery cells 110 accommodated in the inner space of the lower cover 122 to cool the battery cells 110.

In addition, the cooling fluid supply part 130 may include a plurality of supply lines connected to different portions at one side of the lower cover 122. For example, a first supply line 131 and a second supply line 132 may be provided. When the plurality of supply lines are provided, the cooling fluid may be quickly filled in the inner space of the lower cover 122, or the cooling fluid in the inner space of the lower cover 122 may be rapidly circulated. Thus, the battery cells 110 accommodated in the inner space of the lower cover 122 may be rapidly cooled. However, the number of provided supply lines and the structure in which the supply lines are disposed are not limited thereto and thus may vary.

The cooling fluid discharge part 140 is connected to the other side (or a rear surface) of the lower cover 122. The cooling fluid discharge part 140 may discharge the cooling fluid in the inner space of the lower cover 122. Thus, the cooling fluid supplied from one side of the lower cover 122 may pass through the entire inner space and then be discharged to the other side of the lower cover 122. Thus, it may be possible to cool all of the battery cells 110 accommodated in the inner space of the lower cover 122.

Also, the cooling fluid discharge part 140 may include a plurality of discharge lines connected to different portions of the other side of the lower cover 122. The number of discharge lines may be equal to or greater than the number of supply lines. For example, a first discharge line 141 and a second discharge line 142 may be provided. Thus, it may be possible to adjust the amount of cooling fluid discharged to the discharge lines according to the amount of cooling fluid supplied from the supply lines. Thus, it may be easy to prevent an accident in which the lower cover 122 bursts from occurring and to properly maintain the amount of cooling fluid in the inner space of the lower cover 122. However, the number of provided discharge lines and the structure in which the discharge lines are disposed are not limited thereto and thus may vary.

The first blocking part 150 is installed to block a gap between the battery cells 110 and the through-holes 121b. The first blocking part 150 is formed by curing glue applied to be in contact with the battery cells. That is, the first blocking part 150 may be formed by inserting the battery cells 110 into the through-holes 121b and applying the glue between the upper cover 121 and the battery cells 110. Thus, the first blocking part 150 may be coupled to the upper ends of the battery cells 110 and formed along a shape of the space between the battery cells 110.

Also, the first blocking part 150 may be in connect with the upper cover 121 and the battery cells 110 while blocking the gap between the upper cover 121 and the battery cells 110. Thus, while blocking the cooling fluid supplied to the inner space of the lower cover 122 from being discharged through the gap between the upper cover 121 and the battery cells 110, the upper ends of the battery cells 110 may be stably fixed.

The second blocking part 160 may be installed in the inner space of the lower cover 122 and be coupled to the lower ends of the battery cells 110. The second blocking part 160 is formed by curing the glue applied to be in contact with the battery cells. That is, the second blocking part 160 may be formed by filling the glue in the inner space of the lower cover 122 and curing the glue while immersing the battery cells 110 in the glue. Thus, a support groove 161 into which the battery cells 110 are inserted may be formed in the second blocking part 160, and the second blocking part 160 may be coupled to the battery cells 110 so that the battery cells 110 are spaced apart from each other and fixed.

As described above, the upper ends of the battery cells 110 may be fixed by the first blocking part 150, and the lower ends of the battery cells 110 may be fixed by the second blocking part 160. Thus, the battery cells 110 may be maintained in the state of being spaced apart from each other. Thus, a path through which the cooling fluid supplied to the inner space of the lower cover 122 is capable of moving may be formed between the battery cells 110. Thus, the cooling fluid may be in direct contact with the battery cells 110 to cool the battery cells 110.

The battery module 100 may further include a gasket G. The gasket G may be formed along a shape of a connection surface of the upper cover 121 and the lower cover 122. That is, it may be formed along a shape of a contact surface between the first wing part 121a and the second wing part 122a. The gasket G may be installed between the first wing part 121a of the upper cover 121 and the second wing part 122a of the lower cover 122. Thus, the sealing of the connection surface between the upper cover 121 and the lower cover 122 may be maintained. Thus, it may be possible to block the cooling fluid supplied to the inner space of the lower cover 122 from being discharged to the outside.

In addition, the battery module 100 may further include a coupling bolt (not shown). The coupling bolt may pass through the lower cover 122 and be coupled to the upper cover 121. When the coupling bolt is tightened, the upper cover 121 and the lower cover 122 may be coupled to each other, and when the coupling bolts are loosened, the upper cover 121 and the lower cover 122 may be separated from each other. That is, the upper cover 121 and the lower cover 122 may be detachably coupled to each other by the coupling bolt.

For example, the coupling bolt may pass through a screw hole formed in the second wing part 122a from below and be coupled to the screw groove formed in the first wing part 121a. Since an area on which the upper cover 121 and the lower cover 122 are in contact with each other increases by the first wing part 121a and the second wing part 122a, the upper cover 121 and the lower cover 122 may be easily coupled to each other.

In addition, the coupling bolt may be provided in plurality. It may be disposed along a circumference of the upper cover 121 or the lower cover 122. Thus, the coupling bolts may couple the upper cover 121 to the lower cover 122 at a plurality of positions to allow the upper cover 121 and the lower cover 122 to be coupled to each other as a whole. Thus, it may be possible to suppress or prevent a gap from occurring between the upper cover 121 and the lower cover 122.

As described above, it may be possible to easily secure the space through which the cooling fluid moves between the plurality of battery cells 110. That is, the cooling fluid may pass through the space between the battery cells 110 to directly cool the battery cells 110. Thus, even when the distance between the battery cells 110 is narrowed, the cooling fluid may stably pass through the space between the battery cells 110. Thus, it may be possible to effectively cool the plurality of battery cells 110 through the cooling fluid.

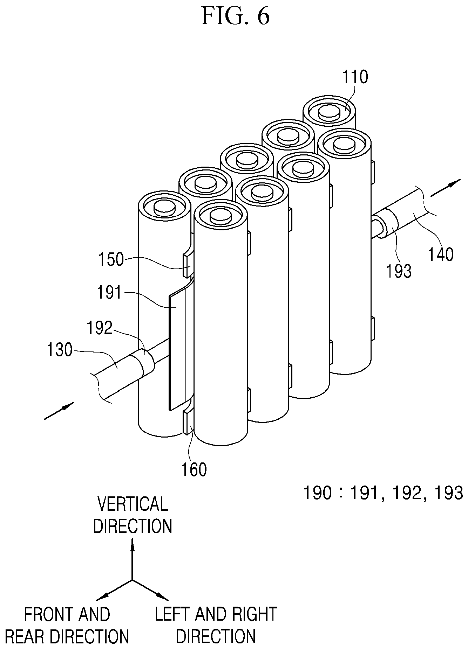

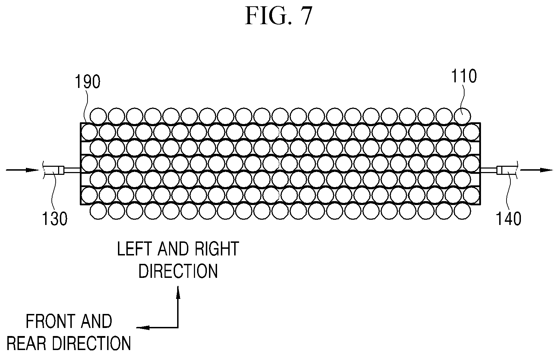

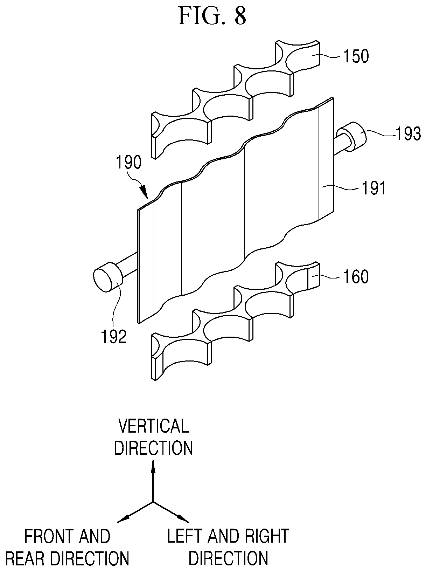

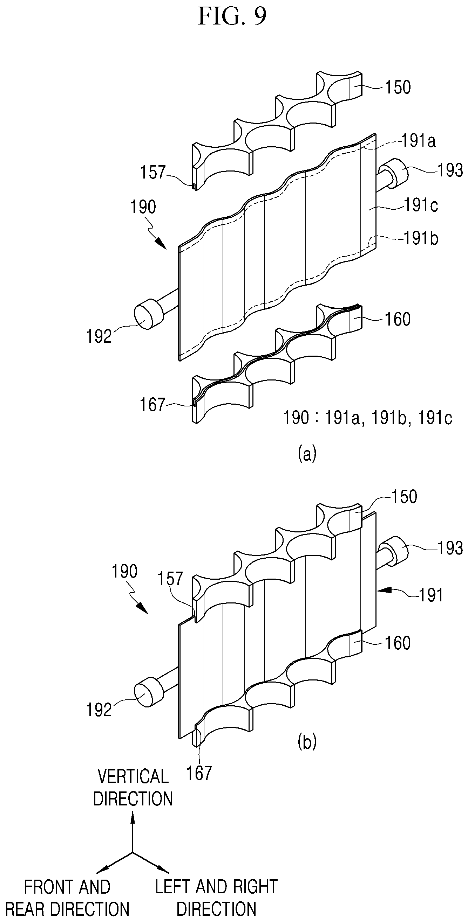

FIG. 6 is a perspective view illustrating a structure of a battery module according to the present invention, FIG. 7 is a plan view illustrating the structure of the battery module according to the present invention, FIG. 8 is a perspective view illustrating structures of a flexible cooling passage, a first blocking part, and a second blocking part according to an example not forming part of the present invention, and FIG. 9 is a perspective view illustrating structures of a flexible cooling passage, a first blocking part, and a second blocking part according to the present invention. Hereinafter, a battery module according to the present invention will be described.

The battery module according to the present invention is a device for supplying power to electronic equipment. Referring to FIGS. 6 to 9, a battery module includes a battery cell 110, a flexible cooling passage 190, a cooling fluid supply part 130, a cooling fluid discharge part 140, a first blocking part 150, and a second blocking part 160.

The battery cell 110 may be formed in a cylindrical shape. The battery cell 110 is provided in plurality. The battery cells 110 may be erected and aligned at preset positions. The battery cells 110 are spaced apart from each other to form an empty space.

The flexible cooling passage 190 is installed between the battery cells 110. At least a portion of the flexible cooling passage 190 may be manufactured to have flexibility. Thus, even if a shape of a space between the battery cells 110 becomes complicated, it may be possible to easily install the flexible cooling passage 190 having the flexibility. The flexible coupling passage 190 includes a body 191, an inlet end 192, and an outlet end 193.

The body 191 forms a path through which the cooling fluid moves. For example, the flexible cooling passage 190 may be an aluminum pouch. The body 191 may extend in a front and rear direction. The body 191 may be deformed in shape along a shape between the battery cells 110 so as to be disposed in contact with the battery cells 110. Thus, the cooling fluid supplied to the inside of the body 191 may cool the battery cells 110 while passing through the body 191 in the front and rear direction.

In addition, the body 191 may be formed in the form of an aluminum pouch. Thus, even if a thickness of the flexible cooling passage 190 is reduced, it may be possible to minimize a decrease in rigidity. Thus, a moving path of the cooling fluid formed by the flexible cooling passage 190 may be miniaturized.

For example, a width of the cooling fluid moving path formed by the body 191 may be 0.15 mm or more and 0.25 mm or less. If the width of the moving path formed by the body 191 is 0.15 mm or less, an amount of moving cooling fluid may be too small so as not to properly cool the battery cells 110. When the width of the moving path formed by the body 191 exceeds 0.25 mm, a width of the space between the battery cells 110 may be greater than the width of the space between the battery cells 110, and thus, the body 191 may not be inserted between the battery cells 110. Thus, the width of the moving path formed by the body 191 may be adjusted so that the body 191 is installed between the battery cells 110 while stably cooling the battery cells 110 through the cooling fluid.

As illustrated in FIG. 7, when the battery cells 110 are arranged in three or more rows in the left and right direction, the body 191 may be provided in plurality. The bodies 191 may be disposed between the battery cells 110 and may be spaced apart from each other in the left and right direction. Thus, the bodies 191 may be disposed in contact with all the battery cells 110 and may cool all the battery cells 110.

The inlet end 192 is provided with a path through which the cooling fluid moves. The inlet end 192 may extend in the left and right direction and may be connected to a front end of the body 191. Thus, when the cooling fluid is supplied to the inlet end 192, the cooling fluid may be supplied to the body 191. The inlet end 192 may be provided as many as the number of supply lines provided in the cooling fluid supply part 130 and may be connected to each of the supply lines.

The outlet end 193 is provided with a path through which the cooling fluid moves. The outlet end 193 may extend in the left and right direction and may be connected to the rear ends of the bodies 191. Thus, the cooling fluid discharged from the body 191 may move to the outlet end 193. The outlet end 193 may be provided as many as the number of discharge lines provided in the cooling fluid discharge part 140 and may be connected to each of the supply lines.

Here, when the plurality of bodies 191 are provided, the inlet end 192 may be connected to the front ends of the bodies 191, and the outlet end 193 may be connected to the rear ends of the bodies 191. Thus, when the cooling fluid is supplied to the inlet end 192, the cooling fluid may be distributed and supplied to the entire body 191, and the cooling fluid discharged from the entire body 191 may move to the outlet end 193. However, the shape and connection structure of the components constituting the flexible cooling passage 190 are not limited thereto and thus may vary.

The cooling fluid supply part 130 is connected to one side (or the front end) of the flexible coupling passage 190. In detail, the cooling fluid supply part 130 may be connected to the inlet end 192. Thus, the cooling fluid supply part 130 may supply the cooling fluid into the flexible cooling passage 190. For example, the cooling fluid may be cooling water. Thus, it may be possible to cool the battery cells 110 in contact with the bodies 191 while the cooling fluid passes inside the bodies 191 provided in the flexible cooling passage 190.

Also, the cooling fluid supply part 130 may include a plurality of supply lines connected to different portions of the inlet end. When the supply line is provided in plurality, the cooling fluid may be supplied to the bodies 191. Thus, it may be possible to rapidly cool the battery cells 110 in contact with the bodies 191.

The cooling fluid discharge part 140 is connected to the other side (or a rear end) of the flexible coupling passage 190. In detail, the cooling fluid supply part 130 may be connected to the outlet end 193. Thus, the cooling fluid supply part 130 may discharge the cooling fluid into the flexible cooling passage 190 to the outside.

Also, the cooling fluid discharge part 140 may include a plurality of discharge lines connected to different portions of the other side of the accommodation part 120. The number of discharge lines may be equal to or greater than the number of supply lines. Thus, it may be possible to adjust the amount of cooling fluid discharged to the discharge lines according to the amount of cooling fluid supplied from the supply lines. Thus, it may be easy to prevent an accident in which the flexible coupling passage 190 bursts, and to properly maintain an amount of cooling fluid inside the flexible coupling passage 190. However, the number of provided discharge lines and the structure in which the discharge lines are disposed are not limited thereto and thus may vary.

The first blocking part 150 is installed between the upper ends of the battery cells 110. The first blocking part 150 may be formed along a shape of the space between the battery cells 110. Thus, the first blocking part 150 may be in contact with upper side surfaces of the battery cells 110, and separates the battery cells 110 from each other.

Also, the first blocking part 150 supports the battery cells 110. That is, the first blocking part 150 may be coupled to the upper ends of the battery cells 110 to fix and support the upper ends of the battery cells 110.

The second blocking part 160 is installed between the lower ends of the battery cells 110. The second blocking part 160 may be formed along the shape of the space between the battery cells 110. Thus, the second blocking part 160 may be in contact with the lower side of the battery cells 110, and separates the battery cells 110 from each other.

Also, the second blocking part 160 supports the battery cells 110. That is, the first blocking part 160 may be coupled to the lower ends of the battery cells 110 to fix and support the lower ends of the battery cells 110. Thus, the upper and lower ends of each of the battery cells 110 may fixed by the first blocking part 150 and the second blocking part 160, respectively, and thus, the battery cells 110 may be disposed at preset positions.

Here, the first blocking part 150 and the second blocking part 160 may be disposed to face each other while being spaced apart from each other in a vertical direction.

In the example, not forming part of the present invention, illustrated in FIG. 8, a spaced space may be formed between the first blocking part 150 and the second blocking part 160, and the flexible coupling passage 190 may be disposed in the spaced space. Since the battery cells 110 are fixed to be spaced apart from each other by the first blocking part 150 and the second blocking part 160, the flexible cooling passage 190 may be prevented from being damaged by being pressed between the battery cells 110, and a space in which the flexible cooling passage 190 is installed may be secured.

In addition, a vertical thickness of the flexible cooling passage 190 may be greater than the sum of the vertical thicknesses of the first blocking part 150 and the second blocking part 160. Thus, a contact area of the flexible cooling passage 190 with the battery cells 110 may increase, and the cooling fluid passing through the flexible cooling passage 190 may more effectively cool the battery cells 110.

The first blocking part 150 and the second blocking part 160 may be formed by curing glue applied to be in contact with the battery cells 110. Thus, the first blocking part 150 and the second blocking part 160 may be attached to the battery cells 110 to stably fix and support the positions of the battery cells 110. Thus, the flexible coupling passage 190 may have the flexibility and be difficult to be maintained in the fixed shape, but the flexible cooling passage 190 may be disposed along the space formed by spacing the battery cells through the first blocking part 150 and the second blocking part 160 to form a path through which the cooling fluid moves.

According to the invention, as illustrated in FIG. 9, a first fixing groove 157 is formed in a lower surface of the first blocking part 150. The upper end of the flexible cooling passage 190 is inserted into the first fixing groove 157 and connected to the first blocking portion 150. A second fixing groove 167 is formed in an upper surface of the second blocking part 160. The lower end of the flexible cooling passage 190 is inserted into the second fixing groove 167 and connected to the second blocking portion 160. Thus, the first blocking part 150 may hold and support a portion of the upper portion of the flexible cooling passage 190, and the second blocking portion 160 may hold and support a portion of the lower portion of the flexible cooling passage 190. Thus, in the flexible coupling passage 190, the portion that is in contact with the first blocking part 150 and the second blocking part 160 may be fixed to be maintained in shape, and the portion that is not in contact with the first blocking part 150 and the second blocking part 160 may be in contact with the battery cells 110 to cool the battery cells 110.

For example, the body 191 includes a first support 191a that is an upper end inserted into the first fixing groove 157, a second support 191b that is a lower end that is inserted into the second fixing groove 167, and a passage part 191c between the first support 191a and the second support 191b. The passage part 191c may not be fixed by the first blocking part 150 or the second blocking part 160, and a free space may be stably formed therein. Thus, a path through which the cooling fluid moves may be substantially formed in the passage part 191c.

In addition, since the first blocking part 150 and the second blocking part 160 are formed by the glue, the first blocking part 150 and the second blocking part 160 may be manufactured in various shapes. Thus, it may be easy to form the first blocking part 150 and the second blocking part 160 according to the shape in which the battery cells 110 are disposed.

Here, each of the first blocking part 150 and the second blocking part 160 may have a waterproof function. Therefore, even if the flexible coupling passage 190 is damaged, and thus, the cooling fluid leaks, the first blocking part 150 and the second blocking part 160 may suppress or prevent the cooling fluid from leaking to other components. Particularly, the shapes of the first blocking part 150 and the second blocking part 160 may be easily deformed so that only the first support 191a and the second support 191b of the body 191 are fixed, and the passage part 191c is not fixed.

The battery module according to the present invention may further include a lower case 170 and an upper case 180 like the battery module according to the first example of FIG. 1. Thus, other components of the battery module may be accommodated in an inner space formed by the lower case 170 and the upper case 180. However, the present invention is not limited thereto, and various combinations are possible.

As described above, it may be possible to easily secure the space through which the cooling fluid moves between the plurality of battery cells 110. That is, it may be possible to secure a space in which the flexible cooling passage 190 is installed between the battery cells 110 by the first blocking part 150 and the second blocking part 160. Thus, even when the distance between the battery cells 110 is narrowed, the cooling fluid may stably pass through the space between the battery cells 110. Thus, it may be possible to effectively cool the plurality of battery cells 110 through the cooling fluid.

In addition, in the battery module according to the present invention, the flexible cooling passage 190 sealed in a tube shape are inserted between the battery cells 110, and the cooling fluid supply part 130 and the cooling fluid discharge part 140 are connected to front and rear ends of the flexible cooling passage 190, respectively. Thus, since the cooling fluid is supplied through the sealed flexible cooling passage 190, the accommodation part may be omitted, unlike the battery module according to the first example as illustrated in FIG. 1.

As described above, while this invention has been particularly shown and described with reference to preferred embodiments thereof, it will be understood by those skilled in the art that various changes in form and details may be made therein without departing from the scope of the invention as defined by the appended claims. Therefore, the scope of the invention is defined not by the detailed description of the invention but by the appended claims.

## Claims

1. A battery module (100) comprising:
a plurality of battery cells (110);
a flexible cooling passage (190) installed between the battery cells (110);
a cooling fluid supply part (192) connected to one side of the flexible cooling passage (190) to supply a cooling fluid into the flexible cooling passage (190);
a cooling fluid discharge part (193) connected to the other side of the flexible cooling passage (190) to discharge the cooling fluid of the flexible cooling passage (190);
a first blocking part (150) installed between upper ends of the battery cells (110) so that the battery cells (110) are spaced apart from each other and supported; and
a second blocking part (160) installed between lower ends of the battery cells (110) so that the battery cells are spaced apart from each other and supported, wherein
the flexible cooling passage (190) is disposed in a spaced space between the first blocking part (150) and the second blocking part (160),
the first blocking part (150) and the second blocking part (160) are formed along a shape of the space between the battery cells (110),
the first blocking part (150) comprises a first fixing groove (157) formed on its lower surface, in which a first supporting portion (191a) of the upper portion of the flexible cooling passage (190) is inserted, thereby supporting the upper part of the flexible cooling passage (190), and
the second blocking part (160) comprises a second fixing groove (167) formed on its upper surface, in which a second supporting portion (191b) of the lower portion of the flexible cooling passage (190) is inserted, thereby supporting the lower part of the flexible cooling passage (190).

2. The battery module (100) of claim 1, wherein a width of a cooing fluid moving path formed by the flexible cooling passage (190) is 0.15 mm or more to 0.25 mm or less.

3. The battery module (100) of any one of claims 1 to 2, wherein the first blocking part (150) and the second blocking part (160) are formed by curing glue applied to be in contact with the battery cells (110).

## Patentansprüche

1. Batteriemodul (100) aufweisend:
mehrere Batteriezellen (110);
einen flexiblen Kühlkanal (190), der zwischen den Batteriezellen (110) installiert ist;
ein Kühlfluidzuführteil (192), das mit einer Seite des flexiblen Kühlkanals (190) verbunden ist, um ein Kühlfluid in den flexiblen Kühlkanal (190) zuzuführen;
ein Kühlfluidabführteil (193), das mit der anderen Seite des flexiblen Kühlkanals (190) verbunden ist, um das Kühlfluid des flexiblen Kühlkanals (190) abzuführen;
ein erstes Blockierteil (150), das zwischen oberen Enden der Batteriezellen (110) installiert ist, so dass die Batteriezellen (110) voneinander beabstandet und gestützt werden; und
ein zweites Blockierteil (160), das zwischen unteren Enden der Batteriezellen (110) installiert ist, so dass die Batteriezellen voneinander beabstandet und gestützt werden, wobei
der flexible Kühlkanal (190) in einem beabstandeten Raum zwischen dem ersten Blockierteil (150) und dem zweiten Blockierteil (160) angeordnet ist,
das erste Blockierteil (150) und das zweite Blockierteil (160) entlang einer Form des Raums zwischen den Batteriezellen (110) ausgebildet sind,
das erste Blockierteil (150) eine erste Befestigungsnut (157) aufweist, die auf seiner unteren Oberfläche ausgebildet ist, in die ein erster Stützabschnitt (191a) des oberen Abschnitts des flexiblen Kühlkanals (190) eingesetzt ist, wodurch der obere Teil des flexiblen Kühlkanals (190) gestützt wird, und
das zweite Blockierteil (160) eine zweite Befestigungsnut (167) aufweist, die auf seiner oberen Oberfläche ausgebildet ist, in die ein zweiter Stützabschnitt (191b) des unteren Abschnitts des flexiblen Kühlkanals (190) eingesetzt ist, wodurch der untere Teil des flexiblen Kühlkanals (190) gestützt wird.

2. Batteriemodul (100) nach Anspruch 1, wobei eine Breite eines Kühlfluidbewegungswegs, der durch den flexiblen Kühlkanal (190) ausgebildet ist, 0,15 mm oder mehr bis 0,25 mm oder weniger beträgt.

3. Batteriemodul (100) nach einem der Ansprüche 1 bis 2, wobei das erste Blockierteil (150) und das zweite Blockierteil (160) durch Aushärten von Klebstoff ausgebildet sind, der aufgebracht ist, um mit den Batteriezellen (110) in Kontakt zu sein.

## Revendications

1. Module de batterie (100) comprenant :
une pluralité de cellules de batterie (110) ;
un conduit de refroidissement flexible (190) installé entre les cellules de batterie (110) ;
un dispositif d'alimentation en fluide de refroidissement (192) raccordé à un bout du conduit de refroidissement flexible (190) pour introduire un fluide de refroidissement dans le conduit de refroidissement flexible (190) ;
un dispositif d'évacuation du fluide de refroidissement (193) raccordé à l'autre côté du conduit de refroidissement flexible (190) pour évacuer le fluide de refroidissement du conduit de refroidissement flexible (190) ;
un premier dispositif de blocage (150) installé entre des extrémités supérieures des cellules de batterie (110), de façon à espacer les cellules de batterie (110) les unes des autres, et à les supporter ; et
un deuxième dispositif de blocage (160) installé entre des extrémités inférieures des cellules de batterie (110), de façon à espacer les cellules de batterie les unes des autres, et à les supporter ;
le conduit de refroidissement flexible (190) étant disposé dans un espace écarté entre le premier dispositif de blocage (150) et le deuxième dispositif de blocage (160),
le premier dispositif de blocage (150) et le deuxième dispositif de blocage (160) étant formés le long d'une forme de l'espace entre les cellules de batterie (110),
le premier dispositif de blocage (150) comprenant une première cannelure de fixation (157) formée sur sa surface inférieure, dans laquelle est insérée une première partie de support (191a) de la partie supérieure du conduit de refroidissement flexible (190), en supportant ainsi l'élément supérieur du conduit de refroidissement flexible (190), et
le deuxième dispositif de blocage (160) comprenant une deuxième cannelure de fixation (167) formée sur sa surface supérieure, dans laquelle est insérée une deuxième partie de support (191b) de la partie inférieure du conduit de refroidissement flexible (190), en supportant ainsi l'élément inférieur du conduit de refroidissement flexible (190).

2. Module de batterie (100) selon la revendication 1, une largeur du chemin de déplacement du fluide de refroidissement formé par le conduit de refroidissement flexible (190) mesurant de 0,15 mm ou davantage à 0,25 mm ou moins.

3. Module de batterie (100) selon une quelconque des revendications 1 à 2, le premier dispositif de blocage (150) et le deuxième dispositif de blocage (160) étant formés en durcissant de la colle appliquée de façon à être au contact des cellules de batterie (110).
